# EUROPÄISCHE PATENTSCHRIFT

(11) **EP 2 051 941 B1**
(45) Veröffentlichungstag und Bekanntmachung des Hinweises auf die Patenterteilung: **06.10.2010**
(21) Anmeldenummer: 07788321.3
(22) Anmeldetag: 08.08.2007
(51) Int. Cl.: C02F 1/48, C02F 1/28, C02F 1/36, C02F 1/62

(54) **VERFAHREN UND VORRICHTUNG ZUR ENTFERNUNG VON IN GELÖSTER FORM VORLIEGENDEN FREMDSTOFFEN AUS ABWASSER**
METHOD AND DEVICE FOR ELIMINATING FOREIGN MATTERS PRESENT IN DISSOLVED FORM FROM WASTE WATER
PROCÉDÉ ET DISPOSITIF D'ENLÈVEMENT DE CORPS ÉTRANGERS PRÉSENTS SOUS FORME DISSOUTE DANS DES EAUX USÉES

(30) Priorität: 16.08.2006 DE 102006038206
(43) Veröffentlichungstag der Anmeldung: 29.04.2009
(73) Patentinhaber: SIEMENS AKTIENGESELLSCHAFT, 80333 München (DE)
(72) Erfinder: RIEBENSAHM, Michael, 91325 Neuhaus-Adelsdorf (DE); VÖGE, Markus, 81477 München (DE)
(86) Internationale Anmeldenummer: PCT/EP2007/058248
(87) Internationale Veröffentlichungsnummer: WO 2008/019982

(56) Entgegenhaltungen:
- EP-A- 0 666 577
- DE-A1- 2 354 842
- DE-A1- 2 719 529
- DE-A1- 10 160 664
- JP-A- 8 281 261
- US-A- 4 001 197
- US-A- 5 397 476
- US-A- 6 071 407
- SHIGERU ITO ET AL: "CONTINUOUS TREATMENT ON MAGNETIC SEPARATION OF HEAVY METAL IONS IN WATER" AMERICAN INSTITUTE OF CHEMICAL ENGINEERS. ANNUAL MEETING, Bd. 81, Nr. 234, 1985, Seiten 133-138, XP000646199

## Beschreibung

Die Erfindung betrifft eine Vorrichtung und ein Verfahren zur kontinuierlichen Entfernung von in gelöster Form vorliegenden Fremdstoffen aus Abwasser. Unter Fremdstoffen sind Substanzen zu verstehen, die aus ökologischen, ökonomischen oder sonstigen Gründen stören und daher dem Abwasser entzogen werden müssen. Während in Form etwa von Feststoffpartikeln vorhandene Fremdstoffe durch mechanische Verfahren relativ problemlos entfernt werden können, sind zur Abscheidung von gelösten Fremdstoffen meist chemische Verfahren erforderlich. Beispielsweise enthalten bei der Erzgewinnung anfallende Abwässer große Mengen an Sulfaten und Schwermetallen. Die Sulfate wurden Üblicherweise durch Zugabe von Kalkmilch als Calciumsulfat ausgefällt. Eine Verwendung des Calciumsulfats zur Herstellung von Gipsprodukten ist aber wegen der Verunreinigung der ausgefällten Sulfatschlämme mit Schwermetallen nicht möglich, so dass meist nur eine kostenintensive Deponierung in Frage kommt.

Die DE 27 19 529 A1 offenbart ein Koagulations- und Adsorptionsmittel zur Wasserklärung. Das teilchenförmige Adsorptionsmittel besteht aus einem feinteiligen Mineral oder Tonmaterial. Die einzelnen Teilchen weisen eine dünne hydroxylierte Oberflächenschicht auf, die bei dem Adsorptions-pH-Wert ein positives Zeta-Potential aufweist. Die dem zu klärenden Wasser zugegebenen Teilchen verbinden sich nach intensivem Rühren mit den in dem Wasser vorhandenen Schadstoffen. Anschließend wird eine Sedimentation der Teilchen abgewartet. Die Sedimentation kann durch den Einsatz eines Magnetseparators beschleunigt werden.

Die DE 695 16 322 T2 offenbart magnetische Teilchen zur Reinigung von Lösungen sowie ein Herstellungsverfahren für solche Teilchen. Die Teilchen verfügen über einen magnetischen Kern um den ein faserartiges Material gewickelt ist. Das faserartige Material ist wiederum von einem Bindemittel durchsetzt. Der Kern kann aus Eisenoxid oder aus einem anderen magnetischen Material bestehen. Das faserartige Material kann insbesondere ein organisches Polymer sein. Die magnetischen Teilchen können mittels allgemein aus dem Stand der Technik bekannter Verfahren unter zu Hilfenahme magnetischer Kräfte aus der zu reinigenden Lösung entfernt werden.

Die DE 101 60 664 A1 offenbart ein Verfahren zur Abwasserreinigung sowie ein für dieses Verfahren geeignetes Adsorptionsmittel mit magnetischen Eigenschaften. Das zu reinigende Abwasser wird eine hinreichend lange Zeit mit dem magnetischen Adsorptionsmittel in Kontakt gebracht, anschließend wird das Gemisch aus Abwasser und Adsorptionsmittel einem Magnetfeld ausgesetzt. Beispielsweise kann das Abwasser durch ein Rohr geleitet werden, in dem sich ein magnetischer Filter befindet. Ein derartiger magnetischer Filter kann durch ein Gitter aus magnetisierbarem Material, eine Anordnung von magnetischen Stäben, durch Stahlwolle oder Eisenspäne gebildet sein.

Aus der US 6,071,407 ist ein Verfahren zur Herstellung von Mikroorganismen für einen biomagnetischen Separationsprozess bekannt. Bei einem solchen Prozess werden einem Reaktionsbehältnis Mikroorganismen zugeführt, die sich dort vermehren und mit den in dem zu klärenden Medium vorhanden Schadstoffen, beispielsweise Schwermetallen, verbinden. Zur gezielten Vermehrung der Mikroorganismen werden diejenigen Mikroorganismen, welche mit Schadstoffen beladen sind aus dem zu klärenden Abwasser separiert. Da die Mikroorganismen magnetische Eigenschaften aufweisen, erfolgt diese Separation durch Einsatz eines Magnetfeldes. Nicht zur Reinigung des Wassers geeignete Mikroorganismen werden gemeinsam mit dem geklärten Wasser entsorgt. Die separierten Mikroorganismen hingegen werden dem Reaktionsbehälter erneut zugeführt, so dass sich diese dort anreichern können.

Die US 5,397,476 offenbart ein Verfahren zur selektiven Entfernung von Schadstoffen. Nach der Vermischung von zur Entfernung der Schadstoffe geeigneter Partikel mit dem kontaminierten Wasser, werden die zur Reinigung verwendeten Partikel in einem magnetischen Separator vom Wasserstrom getrennt, dekontaminiert und anschließend dem kontaminierten Wasserstrom wieder zugefügt. Zur selektiven Entfernung der Schadstoffe sind beispielsweise Partikel mit einem magnetischen Kern, welcher von einer Polymerlage umgeben ist geeignet. Auf und in dieser Polymerlage lagern sich die Schadstoffpartikel ab.

Weitere, für ein solches Verfahren geeignete Partikel sind der EP 0 666 577 A1 zu entnehmen.

Aufgabe der Erfindung ist es, ein Verfahren vorzuschlagen, dass ein einfaches und effektives Abscheiden von unterschiedlichen Fremdstoffen aus einem zu reinigenden Abwasser erlaubt. Insbesondere soll ein Verfahren angegeben werden, mit welchem auf einfache Weise eine separate Entfernung von Schwermetallen und Sulfaten aus Abwässern erreicht werden kann. Eine weitere Aufgabe besteht darin, eine zur Durchführung des Verfahrens geeignete Vorrichtung anzugeben.

Die erste Aufgabe wird durch ein Verfahren nach Anspruch 1, die zweite Aufgabe durch eine Vorrichtung nach Anspruch 9 gelöst.

Bei einem erfindungsgemäßen Verfahren werden dem Abwasser kontinuierlich magnetische oder magnetisierbare Partikel zugesetzt, an denen sich wenigstens ein Fremdstoff anlagert. Die mit Schadstoffen beladenen Partikel werden dann mit einem Magnetfeld aus dem Abwasser abgeschieden und anschließend einer Behandlung unterzogen, bei der Partikel und anhaftende Schadstoffe wieder voneinander getrennt werden. Das erfindungsgemäße Verfahren dient der kontinuierlichen Entfernung von in gelöster Form in dem Abwasser vorliegenden Fremdstoffen. Dabei wird ein Reaktor mit Abwasser in einer Strömungsrichtung durchströmt. An einer ersten und zweiten Einspeisestelle des Reaktors werden dem Abwasser erste und zweite magnetische oder magnetisierbare Partikel zugesetzt, an die sich erste und zweite Fremdstoffe anlagern. An zwei weiteren, in Strömungsrichtung abwärts gelegenen ersten und zweiten Stelle des Reaktors, werden die mit Fremdstoff beladenen ersten und zweiten Partikel durch Beaufschlagung des Abwassers mit einem Magnetfeld in einen fluidisch mit dem Reaktor verbundenen Sammelbereich abgeschieden. Die Partikel und der an den Partikeln anhaftende Fremdstoff werden später voneinander getrennt. Aufgrund der spezifischen Bindungswirkung der Partikel können gezielt bestimmte Fremdstoffe aus dem Abwasser abgeschieden werden, so dass eine sortenreine Trennung der Fremdstoffe gelingt. Dadurch erhöhen sich beispielsweise die Möglichkeiten für eine sinnvolle Wiederverwertung der Fremdstoffe. Im Falle schwermetallhaltiger Sulfat-Abwässer lassen sich die Schwermetalle mit relativ geringem Aufwand aus dem Abwasser separat abtrennen, so dass das verbleibende Sulfat als schwermetallfreies Calciumsulfat mit herkömmlichen Methoden oder bevorzugt ebenfalls mit Hilfe von magnetischen oder magnetisierbaren Partikeln entfernt werden kann. Die Partikel und an ihnen haftende Fremdstoffe werden in einem letzten Verfahrenschritt voneinander getrennt, so dass die Partikel einerseits bei der Wiederverwertung nicht stören und andererseits zur Entfernung von Fremdstoffen aus Abwasser wiederverwendet werden können.

Auf welche Weise die genannte Trennung vorgenommen wird, hängt letztlich von der Art der Bindung zwischen Partikeln und Fremdstoffen ab. Bei einer adsorptiven Haftung der Fremdstoffe an den Partikeln können mechanische Verfahren, beispielsweise eine Behandlung mit Ultraschall, eingesetzt werden. Denkbar ist auch, in einer Suspension fremdstoffbeladener Partikel starke Turbulenzen zu erzeugen und dadurch die Fremdstoffe und Partikel zu separieren. Im Falle einer chemischen Bindung zwischen Partikel und Fremdstoff werden chemische Verfahren eingesetzt. So können beispielsweise Partikel verwendet werden, an deren Oberfläche von Ionenaustauschern her bekannte Gruppen wie etwa Sulfonsäuregruppen zur Bindung von Kationen oder quartäre Ammoniumgruppen oder auch Chelatbildende Gruppen zur Bindung von Anionen vorhanden sind. Die Abtrennung der Fremdstoffe kann dabei auf die gleiche Art erfolgen, wie die Regenerierung entsprechender Ionenaustauscher, beispielsweise im Falle saurer Gruppen durch Behandlung mit Säuren, wobei ein an einem Partikel gebundenes Kation, etwa ein Schwermetallkation, durch ein oder mehrere Protonen ersetzt wird.

Eine Bindung von Fremdstoffen an Partikel lässt sich auch dadurch bewerkstelligen, dass die Partikel mit einer Ummantelung versehen sind, in der oder an deren Oberfläche sich bestimmte Fremdstoffe anreichern. Die Ummantelung könnte dabei aus einer Substanz bestehen, welche eine adsorptive Haftung von Fremdstoffen bewirkt oder die die o.g. Gruppen aufweist.

Bei einer besonders bevorzugten Verfahrensvariante werden Sulfat und Schwermetalle als Fremdstoffe enthaltende Abwässer gereinigt, wobei vorzugsweise zuerst die Schwermetalle mit Hilfe magnetischer oder magnetisierbarer Partikel entfernt werden, bevor eine Abtrennung des Sulfats erfolgt. Das Sulfat kann dann anschließend durch herkömmliche Verfahren oder ebenfalls mit Hilfe der in Rede stehenden Partikel abgetrennt werden. Nach Abtrennung der Partikel von den Schwermetallen können diese beispielsweise bei der Erzgewinnung wiederverwertet werden. Bei einer weiteren bevorzugten Verfahrensvariante erfolgt eine selektive Trennung dadurch, dass dem Abwasser Partikel zugesetzt werden, an die sich nur ein einziges Schwermetall oder nur ein Teil der im Abwasser enthaltenen Schwermetalle anlagert. Auf diese Weise können z.B. bestimmte Schwermetalle, die bei einer Wiederverwertung stören entfernt werden.

Eine zur Durchführung eines Verfahrens der geschilderten Art geeignete Vorrichtung umfasst einen zur Aufnahme von mit Fremdstoffen belastetem Abwasser dienenden Reaktor, der mehrere Sammelbereiche für fremdstoffbeladene magnetische oder magnetisierbare Partikel, sowie Mittel zur Erzeugung eines die Partikel in die Sammelbereiche transportierenden Magnetfelds aufweist. Das Magnetfeld wird vorzugsweise durch wenigstens eine den Sammelbereich umgreifende Magnetspule erzeugt.

Bei einer bevorzugten Vorrichtungsvariante ist der Reaktor rohrförmig ausgebildet. Ein solcher Reaktor eignet sich besonders für eine kontinuierliche Entfernung von Fremdstoffen. Das zu reinigende Abwasser durchströmt den Reaktor, wobei an einer Stelle eine Zudosierung von magnetischen oder magnetisierbaren Partikeln und an stromabwärts gelegenen Stellen des Reaktors der Abwasserstrom mit einem Magnetfeld beaufschlagt wird, um die fremdstoffbeladenen Partikel in fluidisch mit dem Reaktor verbundene Sammelbereiche zu transportieren. Mit anderen Worten sind für mehrere unterschiedliche Fremdstoffe, die selektiv abgetrennt werden sollen, am Reaktor mehrere in dessen Längsrichtung bzw. in Strömungsrichtung des Abwassers beabstandete Sammelbereiche vorhanden.

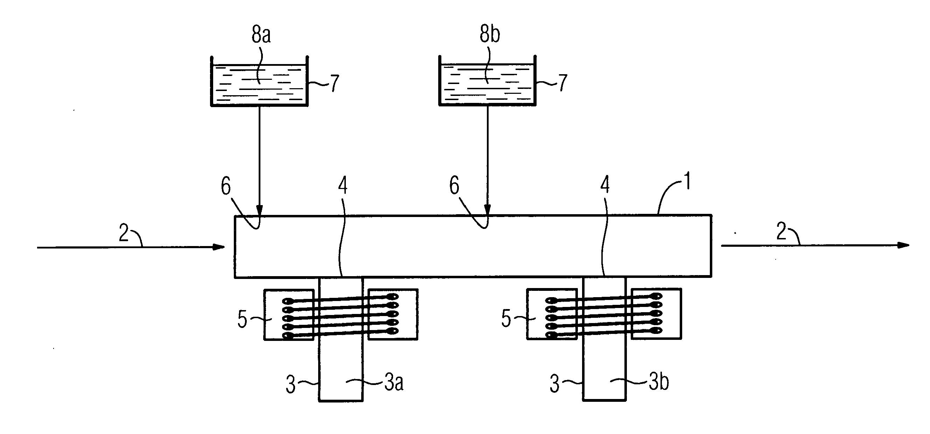

Ein derartiger Reaktor 1 ist in der beigefügten Zeichnung schematisch dargestellt. Der Reaktor 1 ist im Wesentlichen horizontal angeordnet und wird im Betrieb von einem Abwasserstrom, beispielsweise in Richtung der Pfeile 2 durchströmt. Am Außenumfang des Reaktors 1 sind in dessen Längsrichtung bzw. in Strömungsrichtung beabstandete, etwa zylinderförmig ausgestaltete Behälter 3 angeordnet, die einen Sammelbereich 3a für aus dem Abwasser abgeschiedene Partikel bilden. Die Behälter 3 sind über eine Öffnung 4 fluidisch mit dem Reaktor 1 verbunden. Die Behälter 3 sind jeweils in einem der Öffnung 4 nahen Längsabschnitt von einer Magnetspule 5 umfasst. Jeweils an einer stromaufwärts eines Behälters 3 gelegenen Position des Reaktors 1 ist eine Einspeisungsstelle 6 vorgesehen, über die eine magnetische oder magnetisierbare Partikel enthaltene Suspension 8a,8b in das Abwasser eingeleitet werden kann. Die Einspeisung erfolgt aus einem Reservoir 7, das im Vergleich zum Reaktor 1 an einer geodätisch höheren Position angeordnet ist, so dass für die Einspeisung der Partikelsuspension 8a,8b keine Pumpe erforderlich ist. Der Abstand zwischen einer Einspeisestelle 6 und einem Sammelbereich 3a ist so gewählt, dass bei vorgegebener Strömungsgeschwindigkeit des Abwassers eine vollständige Kopplung zwischen den Partikeln der Partikelsuspension 8a,8b und dem jeweiligen Fremdstoff gewährleistet ist. Das Magnetfeld der Magnetspule 5 ist so gewählt, dass die auf die mit Fremdstoff beladenen Partikel einwirkende Kraft ausreicht, um bei gegebener Strömungsgeschwindigkeit des Abwassers die Partikel vollständig aus dem Reaktor heraus und in den Sammelbereich 3 hinein zu fördern. Gegebenenfalls ist die Kraft groß genug, um Partikel auch gegen die Schwerkraft zu befördern. Je nach Art des zu entfernenden Fremdstoffs, kann der Abstand zwischen Einspeisestelle 6 und Sammelbehälter 3a variieren.

## Patentansprüche

1. Verfahren zur kontinuierlichen Entfernung von in gelöster Form vorliegenden Fremdstoffen aus Abwasser, mit folgenden Schritten:
a) Durchströmen eines Reaktors (1) mit Abwasser in einer Strömungsrichtung (2),
b) Zusetzen von magnetischen oder magnetisierbaren Partikeln an einer Einspeisestelle des Reaktors (1) zu dem Abwasser, wobei sich an den Partikeln wenigstens ein Fremdstoff anlagert,
c) Abscheiden von mit Fremdstoff beladenen Partikeln an einer, gegenüber der Einspeisestelle in Strömungsrichtung abwärts gelegenen weiteren Stelle des Reaktors(1), durch Beaufschlagung des Abwasserstroms mit einem Magnetfeld zum Transport der Partikel in einen fluidisch mit dem Reaktor (1) verbundenen Sammelbereich (3a, 3b) und
d) Trennung der Partikel und der an den Partikeln anhaftenden Fremdstoffe voneinander, **dadurch gekennzeichnet, dass**
- erste und zweite magnetische oder magnetisierbare Partikel an einer ersten und einer zweiten Einspeisestelle dem Abwasser zugesetzt werden, wobei sich an die ersten und zweiten Partikel wenigstens ein erster und zweiter Fremdstoff anlagert, und
- erste und zweite Partikel an jeweils einer, gegenüber der jeweiligen ersten und zweiten Einspeisestelle in Strömungsrichtung abwärts gelegenen weiteren ersten und zweiten Stelle des Reaktors(1) abgeschieden werden.

2. Verfahren nach Anspruch 1, **dadurch gekennzeichnet, dass** sich Fremdstoffe adsorptiv an die Partikel anlagern.

3. Verfahren nach Anspruch 1, **dadurch gekennzeichnet, dass** die Partikel mit einer Ummantelung versehen sind, in der oder an deren Oberfläche sich Fremdstoffe anreichern.

4. Verfahren nach einem der Ansprüche 1 bis 3, **dadurch gekennzeichnet, dass** die Trennung von Partikeln und Fremdstoffen **dadurch** erfolgt, dass in einer schadstoffbeladene Partikel enthaltenden Suspension starke Turbulenzen erzeugt werden.

5. Verfahren nach einem der Ansprüche 1 bis 3, **dadurch gekennzeichnet, dass** die Trennung von Partikeln und Fremdstoffen **dadurch** erfolgt, dass die fremdstoffbeladenen Partikel mit Ultraschall behandelt werden.

6. Verfahren nach einem der vorstehenden Ansprüche, **gekennzeichnet durch** Partikel mit spezifischer Bindungswirkung, zur selektiven Bindung von Fremdstoffen.

7. Verfahrens nach Anspruch 1, **dadurch gekennzeichnet, dass** der erste Fremdstoff Sulfat und der zweite Fremdstoff ein Schwermetall ist.

8. Verfahren nach Anspruch 7, **gekennzeichnet durch** e) Ausfällen von in dem Abwasser vorhandenem Sulfat.

9. Vorrichtung zur Durchführung eines Verfahrens nach einem der vorhergehenden Ansprüche, mit einem zur Aufnahme von mit Schadstoffen belastetem Abwasser dienenden Reaktor (1), der zumindest einen Sammelbereich (3a,3b) für schadstoffbeladene magnetische oder magnetisierbare Partikel aufweist, und mit Mitteln zur Erzeugung eines die Partikel in den zumindest einen Sammelbereich (3a,3b) transportierenden Magnetfelds, **dadurch gekennzeichnet, dass** der Reaktor (1) mehrere in Längsrichtung beabstandete Sammelbereiche (3a,3b) aufweist.

10. Vorrichtung nach Anspruch 9, bei der der zumindest eine Sammelbereich (3a,3b) von wenigstens einer Magnetspule (5) umgriffen ist.

11. Vorrichtung nach Anspruch 9 oder 10, mit einem rohrförmigen Reaktor (1), an dessen Außenseite wenigstens ein mit dem Reaktor (1) fluidisch verbundener Sammelbereich (3a,3b) angeordnet ist.

## Claims

1. Method for the continuous elimination from wastewater of foreign matters present in dissolved form, which method has the following steps:
a) passing of wastewater through a reactor (1) in a flow direction (2),
b) adding magnetic or magnetizable particles at a feed site of the reactor (1) to the wastewater, wherein at least one foreign matter attaches to the particles,
c) separating off particles loaded with foreign matter at a further site of the reactor (1) which is situated downstream from the feed site in the flow direction by subjecting the wastewater stream to a magnetic field for transporting the particles into a collecting region (3a, 3b) which is fluid-connected to the reactor (1) and
d) separating the particles and the foreign matters adhering to the particles from one another, **characterized in that**
- first and second magnetic or magnetizable particles are added to the wastewater at a first feed site and a second feed site, wherein at least one first foreign matter and one second foreign matter attach to the first and second particles, and
- first and second particles are separated at respectively a further first and second site of the reactor (1) which are situated downstream in the flow direction of the first and second feed sites.

2. Method according to Claim 1, **characterized in that** foreign matters attach to the particles by adsorption.

3. Method according to Claim 1, **characterized in that** the particles are provided with a coating, in which, or on the surface of which, foreign matters accumulate.

4. Method according to one of Claims 1 to 3, **characterized in that** particles and foreign matters are separated by strong turbulence being generated in a pollutant-loaded particle-containing suspension.

5. Method according to one of Claims 1 to 3, **characterized in that** the particles and foreign matters are separated by the foreign matter-loaded particles being treated with ultrasound.

6. Method according to one of the preceding claims, **characterized by** particles having a specific binding action for the selective binding of foreign matters.

7. Method according to Claim 1, **characterized in that** the first foreign matter is sulfate and the second foreign matter is a heavy metal.

8. Method according to Claim 7, **characterized by** e) precipitating out sulfate which is present in the wastewater.

9. Device for carrying out a method according to one of the preceding claims having a reactor (1) serving for receiving wastewater polluted with pollutants, which reactor has at least one collecting region (3a, 3b) for pollutant-loaded magnetic or magnetizable particles, and having means for generating a magnetic field which transports the particles to the at least one collecting region (3a, 3b), **characterized in that** the reactor (1) has a plurality of collecting regions (3a, 3b) which are spaced apart in the longitudinal direction.

10. Device according to Claim 9, in which the at least one collecting region (3a, 3b) is enclosed by at least one magnetic coil (5).

11. Device according to Claim 9 or 10 having a tubular reactor (1), on the outside of which is arranged at least one collecting region (3a, 3b) which is fluid-connected to the reactor (1).

## Revendications

1. Procédé d'enlèvement en continu de substances étrangères présentes sous forme dissoute dans des eaux usées, comprenant les stades suivants :
a ) on fait passer les eaux usées dans un réacteur ( 1 ) suivant une direction ( 2 ) d'écoulement,
b ) on ajoute des particules magnétiques ou magnétisables aux eaux usées en un point d'injection du réacteur ( 1 ), au moins une substance étrangère se fixant sur les particules,
c ) on sépare des particules chargées de substances étrangères en un autre point du réacteur ( 1 ) en aval par rapport au point d'injection dans la direction du courant, en soumettant le courant d'eaux usées à un champ magnétique pour le transport de particules dans une zone ( 3a, 3b ) de collecte communiquant fluidiquement avec le réacteur ( 1 ) et
d ) on sépare les particules et les substances étrangères des autres, **caractérisé en ce que**
- on ajoute des premières et deuxièmes particules magnétiques ou magnétisables en un premier et en un deuxième point d'injection aux eaux usées, au moins une première et une deuxième substance étrangère se fixant sur les premières et
deuxièmes particules, et
- on sépare des premières et deuxième particules en respectivement un autre premier et deuxième point de réacteur ( 1 ) en aval dans la direction d'écoulement par rapport au premier et deuxième point d'injection respectif.

2. Procédé suivant la revendication 1, **caractérisé en ce que** des substances étrangères se fixent aux particules par adsorption.

3. Procédé suivant la revendication 1, **caractérisé en ce qu'**on munit les particules d'un enrobage, qui s'enrichit en substances étrangères ou dont la surface s'enrichit en substances étrangères.

4. Procédé suivant l'une des revendications 1 à 3, **caractérisé en ce que** l'on effectue la séparation de particules et de substances étrangères en produisant une forte turbulence dans une suspension contenant des particules chargées de substances nocives.

5. Procédé suivant l'une des revendications 1 à 3, **caractérisé en ce que** l'on effectue la séparation de particules et de substances étrangères en traitant les particules chargées de substances étrangères par les ultrasons.

6. Procédé suivant l'une des revendications précédentes, **caractérisé par** des particules ayant un effet de fixation spécifique, pour la fixation sélective de substances étrangères.

7. Procédé suivant la revendication 1, **caractérisé en ce que** la première substance étrangère est un sulfate et la deuxième substance étrangère est un métal lourd.

8. Procédé suivant la revendication 7, **caractérisé par** e ) précipitation de sulfate présent dans les eaux usées.

9. Dispositif pour la mise en oeuvre d'un procédé suivant l'une des revendications précédentes, comprenant un réacteur ( 1 ) servant à la réception d'eaux usées chargées de substances nocives, et ayant au moins une zone ( 3a, 3b ) de collecte de particules magnétiques ou magnétisables chargées de substances nocives et des moyens de production d'un champ magnétique transportant les particules à la au moins une zone ( 3a, 3b ) de collecte, **caractérisé en ce que** le réacteur ( 1 ) a plusieurs zones ( 3a, 3b ) de collecte à distance dans la direction longitudinale.

10. Dispositif suivant la revendication 9, dans lequel la au moins une zone ( 3a, 3b ) de collecte est entourée d'au moins une bobine ( 5 ) magnétique.

11. Dispositif suivant la revendication 9 et 10, comprenant un réacteur ( 1 ) tubulaire de l'autre côté extérieur duquel est disposé au moins en zone ( 3a, 3b ) de collecte communiquant fluidiquement avec le réacteur ( 1 ).
